(19) Europäisches Patentamt
European Patent Office
Office européen des brevets

(11) **EP 4 325 200 A1**

(12) **EUROPEAN PATENT APPLICATION**

(43) Date of publication:
**21.02.2024 Bulletin 2024/08**

(21) Application number: **22191186.0**

(22) Date of filing: **19.08.2022**

(51) International Patent Classification (IPC):
***G01N 15/08*** *(2006.01)*

(52) Cooperative Patent Classification (CPC):
**G01N 15/082;** G01N 15/01; G01N 15/1031;
G01N 2015/084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sartorius Stedim Biotech GmbH
37079 Göttingen (DE)**

(72) Inventors:
• **Austerjost, Jonas
37079 Göttingen (DE)**

• **Söldner, Robert
37079 Göttingen (DE)**
• **Rafigh, Mehran
37079 Göttingen (DE)**
• **Scholz, Jochen
37079 Göttingen (DE)**

(74) Representative: **Cohausz & Florack
Patent- & Rechtsanwälte
Partnerschaftsgesellschaft mbB
Bleichstraße 14
40211 Düsseldorf (DE)**

(54) **METHOD AND APPARATUS FOR VALIDATING A FILTER UNIT**

(57)    Disclosed is inter alia a method for validating a filter unit, wherein the method comprises:
- guiding a fluid flow of a fluid, after the fluid flow passed through the filter unit, to a measurement area that is connected to the filter unit, wherein within the measurement area the fluid is exposed to at least one alternating electric field between at least two electrodes;
- obtaining at least one electric signal between the at least two electrodes, wherein the at least one electric signal is at least affected by whether one or more cells of a plurality of cells in the fluid pass through the measurement area; and
- determining, at least partially based on the obtained at least one electric signal, at least one validity information indicating a validity of the filter unit.

100

Fig.1

EP 4 325 200 A1

## Description

**TECHNICAL FIELD**

Various example embodiments according to the present disclosure relate to validating a filter unit. Specifically, various example embodiments according to the present disclosure relate to determining, at least partially based on an electric signal, at least one validity information indicating a validity of the filter unit.

**BACKGROUND**

A traditional setup for testing the validity or integrity of a filter unit (e.g. when conducting a bacterial challenge test) may for example consist of a filter unit to be tested and a so-called analytical filter that may be arranged downstream from the filter unit to be tested. Therein, the analytical filter may withhold cells (e.g. bacterial cells) in the respective test fluid that could inadvertently pass the filter unit if this filter unit may not be compliant to integrity. For example, after the respective fluid is pumped through this setup, the analytical filter may be incubated on a media agar plate for several days and the agar plate may afterwards be examined. In case of growing microorganisms on the agar plate due to cells that reached the analytical filter after passing the filter unit that was tested, it may for example be determined that the tested filter unit is not valid and fails the integrity test.

Since microorganisms may need days to weeks to be macroscopically visible, the approach of using an analytical filter is time consuming and forms one of the bottlenecks in integrity testing workflows. In addition, investigating an agar plate for possibly growing microorganisms (e.g. by counting colony-forming units) may be a highly manual process that may prevent automatization of the filter integrity testing. An alternative approach could for example be implemented by means of Raman spectroscopy for the identification of viable cells in low concentrations. However, the detection times of Raman spectroscopy might be too long to achieve a time efficient testing procedure. In some other examples, fluorescence-based measurements may allow for cell detection in filter testing, but these measurements typically require labelling of probe cells by fluorophores. The fluorophore labels may affect the property of the probe cells and thus may falsify the test result.

**SUMMARY OF SOME EXEMPLARY EMBODIMENTS**

Various example embodiments according to the present disclosure may have the effect of providing a framework for validating a filter unit. Specifically, certain exemplary embodiments according to the present disclosure may address disadvantages of traditional filter validation tests that rely on time consuming and highly manual process steps.

According to a first aspect of the present disclosure, a method for validating a filter unit is disclosed, wherein the method comprises:

- guiding a fluid flow of a fluid, after the fluid flow passed through the filter unit, to a measurement area that is connected to the filter unit, wherein within the measurement area the fluid is exposed to at least one alternating electric field between at least two electrodes;
- obtaining at least one electric signal between the at least two electrodes, wherein the at least one electric signal is at least affected by whether one or more cells of a plurality of cells in the fluid pass through the measurement area; and
- determining, at least partially based on the obtained at least one electric signal, at least one validity information indicating a validity of the filter unit.

For example, one or more steps of the method according to the first aspect may be performed by an apparatus, which may for example be an apparatus according to a second aspect of the present disclosure as described below.

According to the second aspect of the present disclosure, an apparatus for validating a filter unit is disclosed, wherein the apparatus is configured to perform and/or comprises means for:

- guiding a fluid flow of a fluid, after the fluid flow passed through the filter unit, to a measurement area that is connectable to the filter unit and exposing the fluid to at least one alternating electric field within the measurement area between at least two electrodes;
- obtaining at least one electric signal between the least two electrodes, wherein the at least one electric signal is at least affected by whether one or more cells of a plurality of cells in the fluid pass through the measurement area; and
- determining, at least partially based on the obtained at least one electric signal, at least one validity information indicating a validity of the filter unit.

For example, the apparatus may comprise at least one channel for guiding the fluid flow of a fluid to the measurement area, wherein for example a section of the at least one channel may be understood as measurement area. In some examples, the apparatus may comprise further fluid lines (e.g. hoses or pipes) for guiding the fluid flow of a fluid to the measurement area. One or more fluid lines may also connect the apparatus with the filter unit, such that the fluid may for example be guided to the measurement area after passing through filter unit. In some examples, the apparatus may be configured to incorporate a filter unit through which the fluid flow passes before being guided to the measurement area. The measurement area is connectable (e.g. configured to be connected) to the filter unit, which may for example be understood to mean that the apparatus comprises a connector (e.g. a port located in the housing of the apparatus), which may for example be connected to the measurement area by a fluid line and may for example further be connectable by a fluid line to the filter unit.

In some examples, the at least two electrodes may be electrically connected to or may be part of a measurement unit included in the apparatus, which measurement unit may for example be configured to obtain the at least one electric signal between the at least two electrodes. For obtaining at least one electric signal between the at least two electrodes, the measurement unit may for example comprise one or more measuring instruments such as an ampere meter, a multimeter, an oscilloscope, an impedance analyser or others. In addition, for example for processing the obtained at least one electric signal, the measurement unit may for example further comprise one or more electric amplifiers, filters and/or converters. In some further examples, the measurement unit may further comprise means (e.g. a voltage source or current source, an electric signal generator or others) for exposing the fluid to at least one alternating electric field within the measurement area between the at least two electrodes.

The apparatus may further include an evaluation unit for determining, at least partially based on the at least one electric signal received from a measurement unit, at least one validity information indicating a validity of a filter unit. For example, the evaluation unit may comprise at least one processor and at least one memory including computer program code, the at least one memory and the computer program code configured to, with the at least one processor, cause the evaluation unit at least to determine at least partially based on the at least one electric signal at least one validity information indicating a validity of the filter unit. In further examples, the evaluation unit may comprise a display or similar means as well as one or more electronic interfaces for a connection to an external device (e.g. a computer).

According to a third aspect of the present disclosure, a system is disclosed, wherein the system comprises at least the apparatus according to the second aspect and the filter unit. In some examples, the system may comprise further components such as for example a pump, a reservoir providing the fluid, instruments for adding the plurality of cells to the fluid and/or several fluid lines for connecting the various components of the system.

In a general example, a filter unit may be understood to comprise at least a filter membrane in a filter housing, wherein the filter membrane may for example separate a first chamber from a second chamber within the filter housing. For example, the first chamber may be connected to an inlet opening of the filter unit and the second chamber may be connected to an outlet opening of the filter unit, such that all fluid flowing through the filter unit must pass through the filter membrane. Accordingly, the filter membrane may be connected to the filter housing without allowing bypasses through connections between the filter membrane and the filter housing. Connections may for example be made by embedding in a melt, ultrasonic welding, gluing, overmolding and other techniques.

When validating a filter unit, it may for example be tested whether the filter membrane has defects (e.g. cracks) or whether connections between the filter membrane and the filter housing may be incomplete. For example, a filter unit may be considered valid if the filter membrane and the connections are free from defects or leakages, such that a fluid passing the filter unit is successfully filtered and cells potentially contained in the fluid before passing the filter unit are withheld by the filter unit. In another example, a filter unit may be considered not valid if the filter membrane and/or the connections have defects or leakages, such that a fluid passing the filter unit may not be fully filtered and cells potentially contained in the fluid before passing the filter unit may pass the filter unit without being filtered out.

A cell (e.g. a bacterial cell) may for example be understood as a mass of cytoplasm that is bound externally by a cell membrane. In particular, the cell membrane may surround the interior of the cell and delimit the cell from the surrounding environment. For example, a cell may be of microscopic size and for example includes one or more nuclei and other organelles. In some cases, single cells may be understood as an organism such as a bacterium. Generally, a cell may for example have various cell characteristics such as cell size, cell shape and/or cell type. If for example at least some or all cells of a plurality of cells are cells of the same cell size and/or cell shape, these cells may be considered the same cell type. In other cases, cells of the same genus of bacteria may be considered the same cell type.

Another cell characteristic may for example relate to a viability of a cell. In other words, a particular cell may be classified as viable cell (e.g. a living or active cell) or dead cell (e.g. an inactive cell), wherein such two states may for example show different membranous and/or cytoplasmic characteristics. In particular, a viable cell may be characterised by an intact cellular structure (e.g. an intact cell membrane), while a dead cell may have lost the former integrity of its cell membrane and may have undergone additional disintegration. As further described below, viable cells and dead cells may inter alia differ in their electrical properties.

For example, a filter unit may be validated for cells of a specific cell characteristic. This may be understood to mean that a filter unit may be considered valid if the filter unit withholds cells of this specific cell characteristic contained in a fluid passing the filter unit. To give a non-limiting example, a filter unit may be specifically designed to filter a specific genus of bacteria (e.g. *Brevundimonas diminuta*) out of a fluid. In such a case, the filter unit may be considered valid if the filter unit withholds bacterial cells of this specific genus of bacteria that are contained in a fluid passing the filter unit.

A fluid used for validating a filter unit may for example contain a plurality of cells before a fluid flow of the fluid passes through the filter unit that is to be validated. In some examples, a fluid used for validating a filter unit may be particularly prepared by for example adding (e.g. by pipetting) a plurality of cells to the fluid before a fluid flow of the fluid passes through the filter unit. In addition, the plurality of cells may be prepared before being added to the fluid. For example, a particular bacteria preparation procedure (e.g. an incubation procedure) may be used before bacterial cells are added to the fluid used for validating a filter unit. Regarding the fluid itself (e.g. a liquid), for example any appropriate buffer solution may be used, such as for example sodium phosphate, citric acid, or acetic acid buffers.

A fluid flow (e.g. a fluid stream) of a fluid that passes through the filter unit and is guided to a measurement area may be generated in various ways, which for example includes pumping the fluid into the filter unit (e.g. by using a peristaltic pump that is connected to the filter unit). In other examples, a pressure difference may be generated across the filter unit, such that the fluid is transported through the filter unit due to the pressure difference. A fluid flow may for example be characterized by a flow rate of the flow, which may be understood as the volume of fluid which passes per unit time. For example, the fluid flow may have a flow rate that is large enough to allow for a sufficient amount of fluid passing through the filter unit in a given time period to ensure a time efficient validation test of the filter unit. For example, the fluid may be taken from a reservoir that provides a sufficient amount of fluid for the filter validation test. After the fluid flow has been guided to the measurement area and passed the measurement area, the fluid may for example be drained off. In another example, the fluid may be returned to the reservoir, from which it may again pass the filter unit such that a fluid circulation is established.

After the fluid flow passed through the filter unit, the fluid flow is guided to the measurement area that is connected to the filter unit. This may for example be understood to mean that the measurement area is connected to the filter unit by one or more fluid lines (e.g. hoses or pipes) such that the fluid may flow from the filter unit to the measurement area. In some example, only a part of the fluid flow that passes through the filter unit is guided to a particular measurement area and one further part of the fluid flow that passes through the filter unit is guided to one further particular measurement area as further described below. In such examples, the fluid flow may be divided into at least two flow parts after passing through the filter unit.

After guiding the fluid flow to the measurement area, the fluid is exposed to at least one alternating electric field between at least two electrodes within the measurement area. For example, the measurement area may be understood as particular volume of the fluid that is exposed to the least one alternating electric field. In some examples, the at least one alternating electric field between at least two electrodes may be generated by the at least two electrodes (e.g. by applying a voltage to the at least two electrodes), which may be understood to mean that the at least two electrodes are used for generating the alternating electric field and in addition for obtaining the electric signal between the at least two electrodes as further described below. In other examples, the at least one alternating electric field between at least two electrodes may be generated by one or more additional electrodes (e.g. in a configuration of in total three or four electrodes), which may be understood to mean that the at least two electrodes are not used for generating the alternating electric field, but for obtaining the electric signal between the at least two electrodes as further described below.

In some examples, a first set of at least two electrodes may generate a first alternating electric field and a second set of at least two electrodes may generate a second alternating electric field. The fluid may then for example be exposed to both the first and the second alternating electric field within the measurement area. In particular, the first alternating electric field and second alternating electric field may for example overlap or may in other examples not overlap.

In some examples, a first set of at least two electrodes may generate an alternating electric current and a second set of at least two electrodes may be used to detect the resulting alternating voltage at the position of the second set of electrodes (e.g. an amplitude and/or a phase of the alternating voltage).

In some examples, the measurement area may be given by a section or a portion of a channel through which the fluid flow is guided. The measurement area may then for example be defined by the section or portion of the channel that is exposed to the at least one alternating electric field between the at least two electrodes, wherein the at least two electrodes may for example be mounted at the channel or placed near the channel. Such a channel may for example be part of a fluidic chip (e.g. a millifluidic or microfluidic chip) which may also incorporate the at least two electrodes as further described below.

Obtaining at least one electric signal between the at least two electrodes may for example be understood to comprise observing (e.g. by measuring or detecting) the at least one electric signal. In some examples, obtaining at least one electric signal may further comprise processing the electric signal after the electric signal may be measured, for example by amplifying, filtering, correcting and/or converting the measured at least one electric signal. In further examples, obtaining at least one electric signal between the at least two electrodes may further comprise measuring one or more raw electric signals between the at least two electrodes and obtaining the at least one electric signal at least partially based on the one or more raw electric signals. Since the electric signal is obtained between at least two electrodes, wherein within the measurement area the fluid is exposed to the at least one alternating electric field between the at least two electrodes, the electric signal may for example be understood as electric response of the fluid within the measurement area to the alternating electric field.

The at least one electric signal may be understood as alternating electric signal of a specific signal amplitude, wherein the electric signal alternates at a specific frequency. In particular, the at least one electric signal may follow a waveform such as a sine wave. Accordingly, the electric signal may be obtained at one or more frequencies as further described below.

For example, the at least one electric signal between the at least two electrodes may be an electric current flowing through the at least two electrodes. Assuming that for example the at least one alternating electric field may be generated by applying an alternating voltage to the at least two electrodes, the at least one electric signal between the at least two electrodes may be an electric current flowing between the at least two electrodes and through the fluid located at the measurement area between the at least two electrodes. In another example, the at least one electric signal between the at least two electrodes may be an electric voltage across the at least two electrodes. Assuming that for example an alternating electric current may be forced through the at least two electrodes and the fluid located at the measurement area between the at least two electrodes, the at least one electric signal between the at least two electrodes may be a voltage across the at least two electrodes.

In some examples, a first set of at least two electrodes may generate an alternating electric current and a second set of at least two electrodes may be used to detect the resulting alternating voltage at the position of the second set of electrodes (e.g. an amplitude and/or a phase of the alternating voltage).

The at least one electric signal between the at least two electrodes is affected by whether one or more cells of a plurality of cells in the fluid pass through the measurement area. This may for example be understood to mean that the at least one electric signal between the at least two electrodes changes (e.g. increases or decreases) when one or more cells of a plurality of cells in the fluid pass through the measurement area. For example, at least one electric signal obtained between the at least two electrodes when no cell is present at the measurement area at the time the at least one electric signal is obtained may be different (e.g. larger or lower) compared to at least one electric signal obtained between the at least two electrodes when one or more cells are present at the measurement area at the time the at least one electric signal is obtained. In some examples, the at least one electric signal between the at least two electrodes may indicate whether one or more cells of a plurality of cells in the fluid pass through the measurement area.

Considering for example a bacterial cell contained in the fluid passing through the measurement area, an electrical conductivity across the cell membrane of the bacterial cell may be considered to be rather low and the electrical capacitance of the cell membrane may be considered to be rather high, which may for example imply that the cell membrane poses a significant barrier to a current flow through the fluid. Accordingly, a current flow as electric signal between the at least two electrodes may be reduced by one or more bacterial cells passing through the measurement area. Considering for example an alternating current flow between the at least two electrodes, the barrier caused by the bacterial cell may depend on the frequency of the current flow.

In other examples, the cell membrane may be a barrier for the current flow through the fluid, but the alternating electrical field may cause an alternating polarization of the cell(s) within the fluid exposed to the alternating electric field. This may lead to an increase of the permittivity of the fluid within the measurement area, which may for example be determined (e.g. evaluated) at least partially based on the at least one electric signal. For example, this determining of the permittivity may comprise detecting a phase shift of the alternating voltage measured by a second set of at least two electrodes.

Determining at least one validity information indicating a validity of the filter unit at least partially based on the obtained at least one electric signal may for example be understood to mean that the at least one validity information may at least partially depend on the obtained at least one electric signal. For example, the at least one validity information may indicate whether the filter unit is valid or not, for example by indicating a probability that the filter unit is valid or not. The at least one validity information may for example be understood as Boolean value indicating whether the filter unit is valid or not. In other examples, the at least one validity information may be a one or more numerical values (e.g. a set of numbers or a data set) that may represent whether the filter unit is valid or not (e.g. by representing a probability value for that the filter unit is valid or not) or that may represent a degree of validity of the filter unit. For example, if the at least one validity information indicates that the filter unit is valid or that the degree of validity of the filter unit is above a threshold value, the filter unit may pass the validation test. In other examples, if the at least one validity information indicates that the filter unit is not valid or that the degree of validity of the filter unit is below a threshold value, the filter unit may fail the validation test.

To give a non-limiting example, it may be assumed that the at least one electric signal obtained between the at least two electrodes indicates that one or more cells of a plurality of cells in the fluid pass through the measurement area (e.g. an electric current signal obtained as electric signal at a specific probe frequency between the at least two electrodes may be reduced by one or more cells passing through the measurement area). The fact that one or more cells pass through the measurement area may for example imply that these one or more cells may not have been withheld by the filter unit (e.g. due to defects or leakages in the filter unit as described above) and thus have entered the measurement area. In such a case, the filter unit may be considered invalid and the at least one validity information determined at least partially based on the electric signal (e. g. the reduced electric current between the at least two electrodes) may indicate that the filter unit is not valid. If in another example the at least one electric signal obtained between the at least two electrodes indicates that no cell in the fluid has passed through the measurement area (e.g. an electric current signal obtained as electric signal at a specific probe frequency between the at least two electrodes may not be reduced by any cells passing through the measurement area) the filter unit may be considered valid and the at least one validity information determined at least partially based on the electric signal may indicate that the filter unit is valid.

In further examples, determining at least one validity information indicating a validity of the filter unit may comprise further steps such as determining an electric impedance, capacitance, permittivity or dielectric fluid properties at least partially based on the at least one electric signal as further described below.

Advantageously, the method for validating a filter unit according to the present disclosure provides a time efficient and automated procedure for testing whether a filter unit is valid. In particular, cells that might pass the filter unit due to leakages or defects of an invalid filter unit may be detected by means of at least one electric signal that is affected by whether one or more cells of a plurality of cells in the fluid pass through the measurement area. This way, a manual and time consuming detection of cells as it is for example necessary when incubating an analytical filter and counting possibly growing microorganisms may be avoided.

In the following, further exemplary features and exemplary embodiments of the various aspects of the present disclosure will be described in more detail.

According to an exemplary embodiment of the present disclosure, the method according to the first aspect may further comprise:

- reporting the at least one validity information to a user and/or indicating an alarm message at least partially based on the at least one validity information.

For example, when reporting the at least one validity information indicating a validity of the filter unit to a user, the user may be informed on whether the filter unit is valid or not or on a degree of validity of the filter unit. In further examples, the user may decide at least partially based on the reported validity information whether the filter unit is valid and thus passes the validation test or is not valid and thus fails the validation test. Additionally or alternatively, the method comprises indicating an alarm message at least partially based on the at least one validity information indicating a validity of the filter unit. This may for example be understood to mean that an alarm message is indicated when the at least one validity information indicates that the filter unit is not valid. To give a non-limiting example, reporting the validity information to a user and/or indicating an alarm message may comprise presenting the validity information or the alarm message on a visual display (e.g. a display that is part of or connected to an apparatus performing the determining the at least one validity information) such that it for example may be shown to a user.

According to an exemplary embodiment of the various aspects of the present disclosure, the plurality of cells is added to the fluid before the fluid flow of the fluid passes through the filter unit.

For example, adding the plurality of cells may comprise inserting (e.g. pipetting) the cells into the fluid. Considering for example a plurality of bacterial cells, adding the plurality of cells may require a particular bacteria preparation procedure (e.g. an incubation procedure) before the bacterial cells are added to the fluid. In some examples, the plurality of cells may be added to the fluid flow of the fluid (e.g. after the fluid flow has been generated), while in other examples the plurality of cells may be added to the fluid before the fluid flow is generated. In the latter case, the plurality of cells may be added to a reservoir providing the fluid.

In a non-limiting example, a filter unit may be specifically designed to filter a specific genus of bacteria (e.g. *Brevundimonas diminuta*) out of a fluid. In such a case, the filter unit may be considered valid if the filter unit withholds bacteria of the specific genus that are contained in a fluid passing the filter unit. In this example, the validation of the filter unit may be tested by adding a plurality of bacterial cells of the specific genus to the fluid before the fluid flow of the fluid passes through the filter unit. For example, the fluid then contains the added plurality of bacterial cells of the specific genus and no other cells. Assuming that the filter unit is valid, all bacterial cells of the specific genus in the fluid would be filtered out in the filter unit and thus would not reach the measurement area, such that at least one validity information determined at least partially based on the obtained at least one electric signal would indicate that the filter unit is valid (e.g. since the electric signal would not indicate that any of the added bacterial cells has passed the measurement area during a specific time period).

According to an exemplary embodiment of the present disclosure, the method according to the first aspect may further comprise:

- generating the fluid flow of the fluid through the filter unit.

For example, generating the fluid flow of the fluid through the filter unit may comprise transporting the fluid through the filter unit by for example pumping the fluid into the filter unit and/or by creating a pressure difference across the filter unit. For pumping the fluid into the filter unit, for example a peristaltic pump may be used that may at one side be connected by fluid lines to a reservoir providing the fluid and at the other side be connected by fluid lines to the filter unit. In further examples, a pressure difference across the filter unit may for example be understood as pressure difference between fluid lines connected to the inlet openings and outlet openings of the filter unit.

For example, the fluid flow (e.g. a strength or a flow rate of the fluid flow) may depend on various conditions such as a pump speed, a particular pressure difference across the filter unit, the diameters of the corresponding fluid lines and/or other factors. For example, the fluid flow may have a flow rate that is large enough to allow for a sufficient amount of fluid passing through the filter unit in a given time period to ensure a time efficient validation test of the filter unit.

According to an exemplary embodiment of the various aspects of the present disclosure, the obtaining the at least one electric signal may further comprise:

- observing an electric current between the at least two electrodes.

For example, the at least one electric signal may be obtained by observing an electric current (e.g. a time-dependent electric current $I(t)$) between the at least two electrodes, wherein the electric current may be the at least one electric signal. In other examples, obtaining the at least one electric signal may further comprise processing the observed electric current, for example by amplifying, filtering, correcting and/or converting the observed electric current. The electric current may for example be observed by measuring or detecting the electric current by means of one or more measuring instruments such as an ampere meter, a multimeter, an oscilloscope, an impedance analyser or others.

Observing an electric current between the at least two electrodes may for example be understood to mean that the electric current may be observed (e.g. by measured or detected) for a specific time period. For example, during a specific time period the electric current may be observed continuously or at various points in time during the specific time period.

In some examples, the electric current may be an alternating electric current, which may for example be observed at one or more probe frequencies. When for example the electric current is obtained between at least two electrodes in response to the at least one alternating electric field between the at least two electrodes, the electric current may oscillate at a probe frequency at which the alternating electric field oscillates. For example, obtaining the electric current may comprise observing the electric current at a first specific probe frequency and subsequently observing the electric current at one or more further specific probe frequencies (e.g. to perform a frequency scan or frequency sweep over the one or more probe frequencies).

According to another exemplary embodiment of the various aspects of the present disclosure, the observing the electric current between the at least two electrodes comprises measuring an amplitude and/or a phase of the electric current.

To give a non-limiting example, the electric current between the at least two electrodes may be understood as time-dependent electric current signal $I(t)$ which is measured between the at least two electrodes in response to the alternating electric field. In particular, the alternating electric field may be generated by applying a time-dependent voltage signal $V(t)$ to the least two electrodes. In other examples, the at least one alternating electric field between the at least two electrodes may be generated by one or more additional electrodes (e.g. in a configuration of in total three or four electrodes). Assuming for example an applied sine-wave voltage signal, the voltage and current signal may be described as

$$V(t) = \hat{V} \cdot \sin(\omega t)$$

$$I(t) = \hat{I} \cdot \sin(\omega t + \varphi),$$

wherein $\overline{V}$ and $\hat{I}$ denote the voltage and the current amplitude, respectively. With $f$ denoting the probe frequency at which the electric current signal $I(t)$ is observed, the angular frequency is given by $\omega = 2\pi f$. In this example, $\varphi$ is the phase difference between $I(t)$ and $V(t)$. Measuring an amplitude and/or a phase of the electric current may then for example be understood to mean that $\hat{I}$ as amplitude and/or $\varphi$ as phase are measured.

For example, the measured amplitude and/or phase may be affected by whether one or more cells of a plurality of cells in the fluid pass through the measurement area. This may for example be understood to mean that the measured amplitude and/or phase change when one or more cells of a plurality of cells in the fluid pass through the measurement area. Accordingly, the at least one validity information indicating a validity of the filter unit may for example be determined at least partially based on the measured amplitude and/or phase (e.g. especially on a phase shift $\varphi$ between voltage and current). In other examples, the measured amplitude and/or phase may be used to determine for example an electric impedance as further described below.

According to another exemplary embodiment of the various aspects of the present disclosure, the at least one alternating electric field oscillates at one or more probe frequencies at which the at least one electric signal between the at least two electrodes is obtained.

In some examples, the at least one electric signal may be an alternating electric current signal or and alternating voltage signal, which may for example be observed at one or more probe frequencies. When for example the at least one electric signal is obtained in response to the at least one alternating electric field between the at least two electrodes, the electric signal may oscillate at a probe frequency at which the alternating electric field oscillates. For example, obtaining the at least one electric signal may comprise obtaining one electric signal at a first specific probe frequency and subsequently obtaining one or more further electric signals at one or more further respective specific probe frequencies (e.g. to perform a frequency scan or frequency sweep over the one or more probe frequencies), which may for example allow for obtaining a frequency dependence of the at least one electric signal (e.g. over a particular frequency range).

The one or more probe frequencies at which the at least one alternating electric field oscillates may for example be determined (e.g. set or adjusted) by the one or more frequencies at which the alternating voltage is applied to the at least two electrode generating the alternating electric field oscillates. For example, a particular probe frequency of a voltage signal applied to the at least two electrode generating the alternating electric field oscillates is set and subsequently an electric current signal is obtained at this particular probe frequency.

The one or more probe frequencies may for example be selected according to various criteria. For example, the effect that one or more cells of a plurality of cells in the fluid passing through the measurement area have on the at least on electric signal may depend on the probe frequency at which the at least one electric field alternates and at which the at least one electric signal is obtained. Accordingly, one or more frequencies at which the effect that one or more cells of a plurality of cells in the fluid passing through the measurement area have on the at least one electric signal is particularly large (e.g. larger compared to other frequencies) may be selected as one or more probe frequencies.

According to another exemplary embodiment of the various aspects, the at least one electric signal is further affected by at least one of the following cell characteristics of the one or more cells passing through the measurement area:

- a cell size, a cell shape, a cell type and/or a cell viability.

As described above, the at least one electric signal between the at least two electrodes is affected by whether one or more cells of a plurality of cells in the fluid pass through the measurement area, which may for example be understood to mean that the at least one electric signal between the at least two electrodes changes (e.g. increases or decreases) when one or more cells of a plurality of cells in the fluid pass through the measurement area. In further examples, the at least one electric signal may be further affected by one or more cell characteristics such as a cell size, a cell shape, a cell type and/or a cell viability. To give a non-limiting example, one or more larger cells passing through the measurement area may have a larger effect on the at least one electric signal and thus may cause a larger change (e.g. increase or decrease) in the at least one electric signal than one or more smaller cells passing through the measurement area. In other examples, one or more cells of a specific cell shape or cell type passing through the measurement area may have a different (e.g. larger or lower) effect on the at least one electric signal and thus may cause a larger or lower change in the at least one electric signal than one or more cells of a different cell shape or cell type passing through the measurement area.

In another example, the at least one electric signal is further affected by the cell viability of the one or more cells passing through the measurement area. As described above, a particular cell may be classified as viable cell (e.g. a living, active cell) or dead cell (e.g. an inactive cell), wherein such two states may for example show different membranous and/or cytoplasmic characteristics. In particular, a viable cell may be characterised by an intact cellular structure (e.g. an intact cell membrane), while a dead cell may have lost the former integrity of its cell membrane and may have undergone additional disintegration. Considering for example a viable bacterial cell contained in a fluid, its intact cell membrane may pose a larger barrier to a current flow through the fluid compared to a dead bacterial cell which may for example lack an intact cell membrane.

For example, the at least one electric signal is further affected by at least one of the following cell characteristics of the one or more cells passing through the measurement at least partially based on the probe frequency at which the electric signal is obtained. This may for example be understood to mean that a particular cell characteristic may have a larger effect on the at least one electric signal at one or more particular frequencies compared to other particular frequencies. Accordingly, the at least one electric signal may be obtained at more than one probe frequency to observe whether the at least one electric signal may be affected by a particular cell characteristic. In other examples, a frequency scan over a range of probe frequencies may be performed when obtaining the at least one electric signal to ensure that the at least one electric signal may be further affected by a particular cell characteristic.

In some examples, the at least one electric signal may indicate one or more cell characteristics of one or more cells passing through the measurement area. It may also for example be possible that the at least one electric signal is further processed (e.g. by determining an electric impedance, a capacitance, a permittivity or other dielectric fluid properties at least partially based on the at least one electric signal) in order to indicate one or more cell characteristics of one or more cells passing through the measurement area.

According to another exemplary embodiment of the various aspects, the determining at least one validity information further comprises:

- determining an electric impedance at least partially based on the obtained at least one electric signal, wherein the determining at least one validity information is at least partially based on the determined electric impedance.

In a general example, an electric impedance at least partially based on the at least one electric signal obtained between the at least two electrodes may be understood as a measure of an opposition that the at least two electrodes and the fluid located between the at least two electrodes at the measurement area present to an electric current flow between the at least two electrodes. Accordingly, an electric impedance at least partially based on the obtained at least one electric signal between the at least two electrodes may not only depend on the fluid and one or more cells that potentially pass the measurement are at the time of obtaining the at least one electrical signal, but it for example additionally depends on the properties of the at least two electrodes (e. g. the material or the geometric arrangement of the electrodes) and further factors of the measurement setup.

Assuming that for example the obtained at least one electric signal may be given by an electric current between the at least two electrodes while applying an alternating voltage to the at least two electrodes, the electric impedance determined at least partially based on the electric current may be given by the ratio between the applied voltage signal and the obtained current signal. Considering an example as described above of observing an electric current as electric signal $I(t) = \hat{I} \cdot \sin(\omega t + \varphi)$ between the at least two electrodes while applying an alternating voltage $V(t) = \hat{V} \cdot \sin(\omega t)$ to the at least two electrodes, the electric impedance $Z$ may for example be determined by

$$Z(j\omega) = \frac{V(j\omega)}{I(j\omega)} = \frac{\hat{V}}{\hat{I}} \cdot e^{-j\varphi} = |Z| \cdot e^{-j \cdot \mathrm{Arg}(Z)},$$

wherein j is the imaginary unit and the magnitude $|Z|$ represents the ratio of the voltage amplitude to the current amplitude, while the argument $\mathrm{Arg}(Z)$ gives the phase difference between voltage and current. An electric impedance may for example be determined at one or more probe frequencies at which the at least one electric signal is obtained. If for example the at least one electric signal is obtained over a range of probe frequencies, the electric impedance maybe determined at this range of probe frequencies, which may for example provide an impedance spectrum.

An electric impedance (e.g. the magnitude or argument of the electric impedance) determined at least partially based on the at least one electric signal obtained between the at least two electrodes may for example indicate whether one or more cells of a plurality of cells in the fluid pass through the measurement area, which may for example be understood to mean that the electric impedance changes (e.g. increases or decreases) when one or more cells of a plurality of cells in the fluid pass through the measurement area. Considering for example a bacterial cell contained in the fluid passing through the measurement area, the cell membrane may pose a significant barrier to a current flow through the fluid. Accordingly, the electric impedance (e.g. the magnitude and/or argument of the electric impedance at one or more probe frequencies) determined at least partially based on the at least one electric signal obtained between the at least two electrodes may be changed (e.g. increased or decreased) by one or more bacterial cells passing through the measurement area.

An electric impedance determined at least partially based on the at least one electric signal obtained between the at least two electrodes may for example be used as basis for determining at least one validity information indicating a validity of the filter unit. To give a non-limiting example, it may be assumed that the electric impedance indicates that one or more cells of a plurality of cells in the fluid pass through the measurement area (e. g. because the electric impedance determined based on an electric current flow obtained as electric signal at a specific frequency between the at least two electrodes may be increased by one or more cells in the fluid passing through the measurement area). In such a case, the filter unit may be considered not valid and the at least one validity information determined at least partially based on the electric impedance may indicate that the filter unit is not valid. If in another example the electric impedance indicates that no cell in the fluid has passed through the measurement area (e.g. because the electric impedance determined based on an electric current flow obtained as electric signal at a specific frequency between the at least two electrodes may not be increased by any cells passing through the measurement area) the filter unit may be considered valid and the at least one validity information determined at least partially based on the electric impedance may indicate that the filter unit is valid.

In addition or as alternative to an electric impedance, other quantities that indicate whether one or more cells of a plurality of cells in the fluid pass through the measurement area may be determined at least partially based on the at least one electric signal obtained between the at least two electrodes. Such other quantities may then be used as basis for determining at least one validity information indicating a validity of the filter unit. For example, such other quantities (e.g. a permittivity or a capacitance) may characterize one or more electric properties (e.g. the polarizability or conductivity or another dielectric property) of the fluid and potentially one or more cells in the fluid between the at least two electrodes within the measurement area.

According to an exemplary embodiment of the various aspects of the present disclosure, the at least one validity information indicates a validity of the filter unit by indicating a number of cells of the plurality of cells in the fluid that passed through the measurement area during a specified time period. In some examples, determining the at least one validity information may comprise determining, at least partially based on the obtained at least one electric signal, a number of cells of the plurality of cells in the fluid that passed through the measurement area during a specified time period. In another example, the at least one validity information may indicate a validity of the filter unit by indicating whether a number of cells of the plurality of cells in the fluid that passed through the measurement area during a specified time period is below or above a threshold value.

To give a non-limiting example, the at least one electric signal (e.g. an electric current between the at least two electrodes) may be obtained for a specific time period (e.g. at one or more probe frequencies). In such an example, it may be counted how many times the electric signal may be affected by one or more cells passing through the measurement area over the specific time period. If for example the at least one electric signal indicates a particular number of times that a cell passes through the measurement area during the specific time period, this number may be indicated by the at least one validity information determined at least partially based on the at least one electric signal. In another example, a particular number of times that a cell passes through the measurement area during the specific time period may be determined at least partially based on an electric impedance, which may be determined at least partially based on the obtained at least one electric signal.

As described above, a filter unit may be considered valid if the filter membrane and the connections are free from defects or leakages, such that a fluid passing the filter unit is successfully filtered and cells potentially contained in the fluid before passing the filter unit are withheld by the filter unit. Accordingly, if for example the at least one validity information indicates that a particular number of cells of the plurality of cells in the fluid passed through the measurement area during a specified time period, the filter unit may be considered valid if the particular number of cells is below a threshold number of cells. This may be understood to mean that it may be acceptable for the filter unit to be considered valid if no cells or at most a particular number of cells passed the filter unit and reached the measurement area during the specific time period.

According to an exemplary embodiment of the various aspects of the present disclosure, the at least one validity information indicates a validity of the filter unit by indicating at least one of the following:

- whether any cell of the plurality of cells in the fluid passed through the measurement area during a specified time period; and/or
- a number of viable cells that passed through the measurement area during a specified time period; and/or
- a number of cells of a specified cell size, a specified cell shape and/or a specified cell type that passed through the measurement area during a specified time period.

For example, the at least one validity information may indicate that the filter unit is valid by indicating that no cells of the plurality of cells in the fluid passed through the measurement area during a specified time period. In another example, the at least one validity information may indicate that the filter unit is not valid by indicating that at least one cell or a minimum number of cells of the plurality of cells in the fluid passed through the measurement area during a specified time period.

Considering for example cell viability as cell characteristic, the at least one validity information may indicate that the filter unit is valid by indicating that no viable cells of the plurality of cells in the fluid passed through the measurement area during a specified time period. In another example, the at least one validity information may indicate that the filter unit is not valid by indicating that at least one viable cell or a minimum number of viable cells of the plurality of cells in the fluid passed through the measurement area during a specified time period.

In a similar manner, the at least one validity information may indicate that the filter unit is valid by indicating that no cells of a specified cell size, a specified cell shape and/or a specified cell type of the plurality of cells in the fluid passed through the measurement area during a specified time period. In another example, the at least one validity information may indicate that the filter unit is not valid by indicating that at least one cell or a minimum number of cells of a specified cell size, a specified cell shape and/or a specified cell type of the plurality of cells in the fluid passed through the measurement area during a specified time period.

Considering the examples given above, determining the at least one validity information may for example comprise determining, at least partially based on the obtained at least one electric signal, a number of cells of one or more cell characteristics (e.g. cell size, cell shape, cell type and/or cell viability) of the plurality of cells in the fluid that passed through the measurement area during a specified time period. To give a non-limiting example, the at least one electric signal (e.g. an electric current between the at least two electrodes) may be obtained for a specific time period (e.g. at one or more probe frequencies). In such an example, it may be counted how many times the electric signal may be affected by one or more cells of one or more cell characteristics (e.g. cell size, cell shape, cell type and/or cell viability) passing through the measurement area over the specific time period. If for example the at least one electric signal indicates a particular number of times that a cell of one or more cell characteristics (e.g. cell size, cell shape, cell type and/or cell viability) passes through the measurement area during the specific time period, this number may be indicated by the at least one validity information determined at least partially based on the at least one electric signal. In another example, a particular number of times that a cell of one or more cell characteristics (e. g. cell size, cell shape, cell type and/or cell viability) passes through the measurement area during the specific time period may be determined at least partially based on an electric impedance, which may be determined at least partially based on the obtained at least one electric signal.

According to an exemplary embodiment of the various aspects of the present disclosure, the measurement area is a section of a channel through which the fluid flow is guided. The measurement area may then for example be defined by the section or portion of the channel that is exposed to the at least one alternating electric field between the at least two electrodes, wherein the at least two electrodes may for example be mounted at the channel or placed near the channel. Such a channel may for example be part of a fluidic chip (e.g. a millifluidic or microfluidic chip) which may also incorporate the at least two electrodes as further described below. For example, such a fluidic chip may be made from glass and may incorporate one or more channels (e.g. defined in a photosensitive polymer) with the at least two electrodes (e. g. platinum microelectrodes) deposited for example on the top and bottom of the one or more channels.

For example, the channel of which a section is the measurement area may be connected to the filter unit by one or more fluid lines (e.g. hoses or pipes) such that the fluid may flow from the filter unit to the channel through the measurement area. For example, the channel of which a section is the measurement area, the at least two electrodes and/ or a fluidic chip incorporating the channel and/or the at least two electrodes may be part of a flow-through cell. Such a flow-through cell may for example be electrically connected to one or more means (e.g. measuring instruments such as an ampere meter, a multimeter, an oscilloscope, an impedance analyser or others) for obtaining the at least one electric signal.

According to an exemplary embodiment of the various aspects of the present disclosure, the method further comprises:

- guiding at least one further part of the fluid flow, after the fluid flow passed through the filter unit, to one further measurement area that is connected to the filter unit, wherein within the one further measurement area the fluid is exposed to at least one further alternating electric field between at least two further electrodes;
- obtaining at least one further electric signal between the at least two further electrodes, wherein the at least one further electric signal is at least affected by whether one or more cells of the plurality of cells in the fluid pass through the one further measurement area, and wherein the determining the at least one validity information indicating a validity of the filter unit is at least partially based on the obtained at least one electric signal and the obtained at least one further electric signal.

As described above, in some examples only a part of the fluid flow that passes through the filter unit is guided to a particular measurement area and one further part of the fluid flow that passes through the filter unit is guided to one further particular measurement area. In such examples, the fluid flow may be divided into at least two flow parts after passing through the filter unit. Accordingly, one part of the fluid flow may for example be guided to the measurement area as described above and one further part of the fluid flow may for example be guided to one further measurement area. For example, for both the measurement area and the one further measurement area, a separate electric signal may be obtained between respective at least two electrodes and both separate electric signals maybe used as basis for determining the at least one validity information. Considering for example that both the measurement area and the one further measurement area may be a respective section of a respective channel through which the respective parts of the fluid flow are guided, both channels may be part of one fluidic chip (e.g. a millifluidic or microfluidic chip) or may be part of respective separate fluidic chips.

Considering that determining the at least one validity information indicating a validity of the filter unit is at least partially based on the obtained at least one electric signal and the obtained at least one further electric signal, this may for example be understood to mean that 1) at least partially based on the obtained at least one electric signal, a number of cells of the plurality of cells in the fluid that passed through the measurement area during a specified time period is determined and 2) at least partially based on the obtained at least one further electric signal, a number of cells of the plurality of cells in the fluid that passed through the one further measurement area during a specified time period is determined. In such an example, the filter unit may be considered valid and the validity information may indicate that the filter unit is valid if it is determined that 1) no cell in the fluid has passed through the measurement area during the specified time period and 2) no cell in the fluid has passed through the one further measurement area during the specified time period.

For example, guiding at least one further part of the fluid flow, after the fluid flow passed through the filter unit, to one further measurement area may be understood to mean that the process of validating the filter unit may be parallelised by using not only one single measurement area, but two or more measurement areas for obtaining respective electric signals based on which a validity information may be determined. This approach of parallelising may for example increase the throughput of the fluid that may be checked for containing any cells after passing through the filter unit. By dividing the fluid flow after passing through the filter unit and guiding multiple parts of the fluid flow in parallel to respective measurement areas, the overall throughput of the fluid through all measurements areas taken together may for example be increased without increasing the size or volume of the individual measurement areas, which may be advantageous with regard to the accuracy with which individual cells passing through a respective measurement area may be detected. As result, the time efficiency of the filter validation test may for example be further improved.

Considering the disclosed features above, the disclosure of features with respect to the measurement area, the at least one alternating electric field, the at least one electric signal and the at least two electrodes shall also be considered as a respective disclosure of these features regarding the one further measurement area, the at least one further alternating electric field, the at least one further electric signal and the at least two further electrodes.

Further considering the disclosed features above, the disclosure of a method step of the method according to the first aspect of the present disclosure shall also be considered as a disclosure of means of an apparatus according to the second aspect of the present disclosure for performing the respective method step. Likewise, the disclosure of means for performing a method step shall also be considered as a disclosure of the method step itself.

It is to be understood that the presentation of the embodiments disclosed herein is merely by way of examples and non-limiting.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

## BRIEF DESCRIPTION OF THE FIGURES

Some example embodiments will now be described with reference to the accompanying drawings.

Fig. 1 shows a block diagram of a system according to the third aspect of the present disclosure;

Figs. 2a, 2b show an exemplary embodiment according to the various aspects of the present disclosure;

Fig. 3 shows an exemplary embodiment of a filter unit according to the various aspects of the present disclosure;

Fig. 4 shows an exemplary embodiment of an apparatus according to the second aspect of the present disclosure; and

Fig. 5 shows a flow chart illustrating an exemplary embodiment of a method according to the first aspect of the present disclosure.

## DETAILED DESCRIPTION OF THE FIGURES

The following description serves to deepen the understanding of the present disclosure and shall be understood to complement and be read together with the description of exemplary embodiments of the present disclosure as provided in the above summary section of this specification.

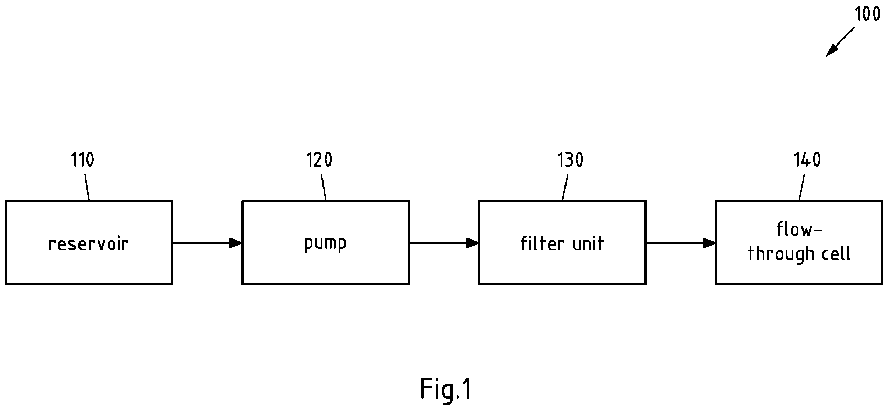

Fig. 1 shows a block diagram illustrating an exemplary embodiment of a system 100 according to the third aspect of the present disclosure. Without limiting the scope of the present disclosure, it may be assumed as an example that system 100 comprises at least a reservoir 110, a pump 120, a filter unit 130 and a flow-through cell 140.

For example, reservoir 110, pump 120, filter unit 130 and flow-through cell 140 may be connected by fluid lines (e.g. hoses or pipes), such that a fluid provided by reservoir 110 may be transported by pump 120, wherein pump 120 may generate a fluid flow of the fluid passing through filter unit 130. After passing through filter unit 130, the fluid flow (e.g. at least a part of the fluid flow) may for example be transported through a further fluid line from filter unit 130 to flow-through cell 140, wherein flow-through cell 140 may comprise at least one channel through which the fluid flow is guided to at least one measurement area, which may for example be a section of the at least one channel. After the fluid flow has been guided to the measurement area and passed the measurement area, the fluid may for example be drained off. In another example, the fluid after the flow-through cell may be returned to reservoir 110, from which it may again pass filter unit 130 such that a fluid circulation in system 100 is established.

For example, reservoir 110 may provide a sufficient amount of fluid for a validation test to test the validity of filter unit 130 and may be understood as for example an open or closed container that contains the fluid. Additionally, reservoir 110 may allow for insertion (e.g. by pipetting) a plurality of cells to the fluid contained in the reservoir before a fluid flow of the fluid is generated by pump 120 and passes through filter unit 130. Therein, pump 120 may for example be a peristaltic pump that is connected to filter unit 130 and that pumps the fluid taken from reservoir 110 into filter unit 130. In addition or as alternative to pump 120, the fluid flow may be generated by a pressure difference across filter unit 130, which may for example be understood as pressure difference between respective fluid lines connected to an inlet opening and an outlet opening of filter unit 130.

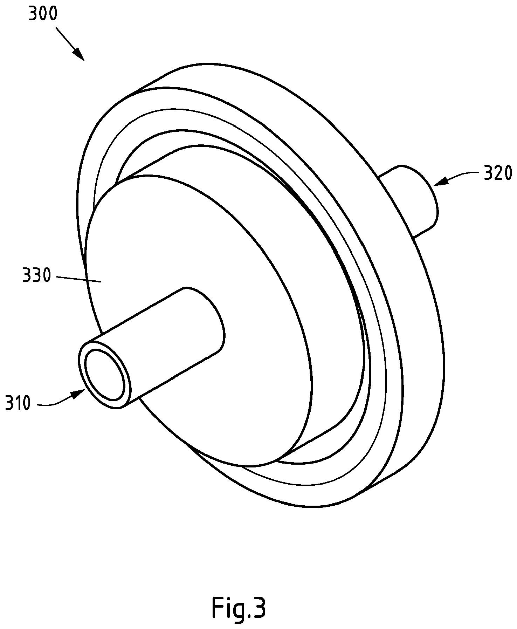

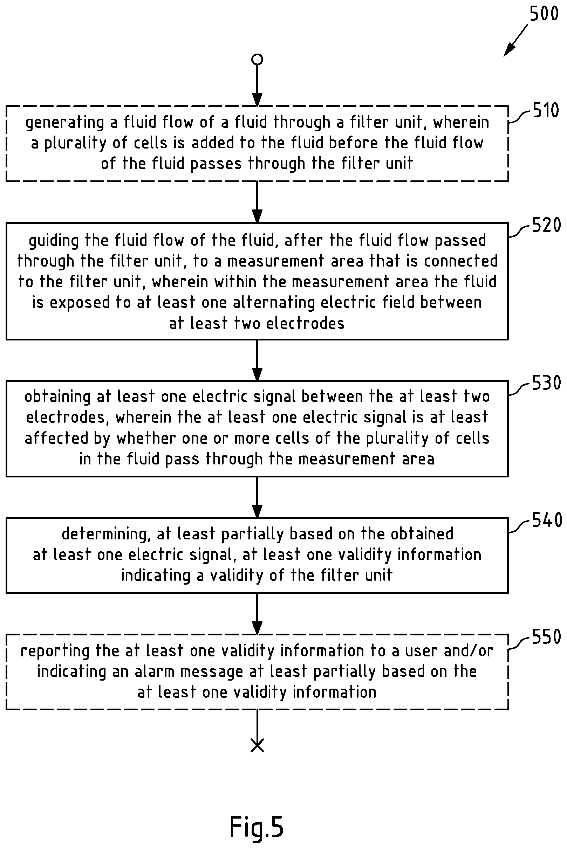

Filter unit 130 may for example be designed to filter a plurality of cells out of the fluid that is transported from reservoir 110 to filter unit 130. For example, system 100 may be used by following the actions of flow chart 500 shown in Fig. 5 below for validating filter unit 130. Therein, filter unit 130 may for example be considered valid if a filter membrane and connections of filter unit 130 are free from defects or leakages, such that the fluid passing filter unit 130 is successfully filtered and cells potentially contained in the fluid before passing the filter unit are withheld by filter unit 130. An exemplary embodiment of filter unit 130 may for example be given by filter unit 300 shown in Fig. 3 below.

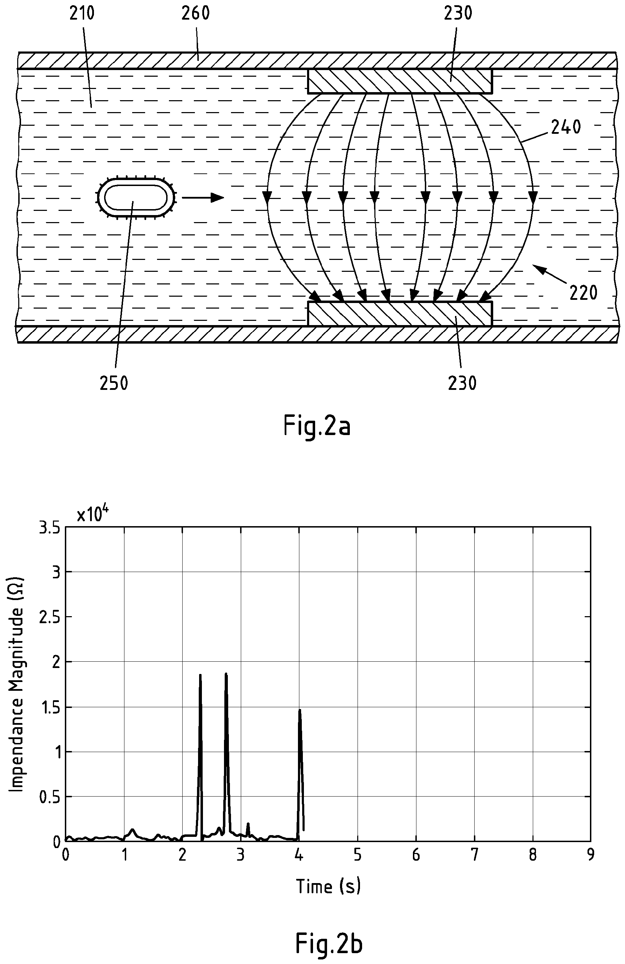

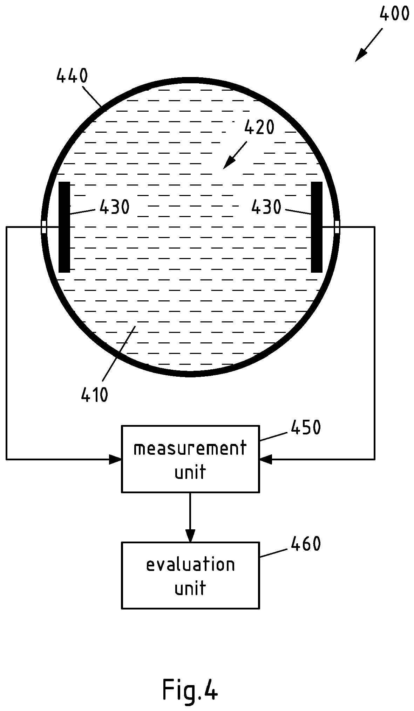

As described above, flow-through cell 140 may comprise at least one channel through which the fluid flow is guided to at least one measurement area, which may for example be a section of the at least one channel. For example, the channel of which a section is the measurement area, at least two electrodes and/ or a fluidic chip (e.g. a millifluidic or microfluidic chip) incorporating the channel and/or the at least two electrodes may be part of flow-through cell 140. For example, flow-through cell 140 may be electrically connected to one or more means (e.g. measuring instruments such as an ampere meter, a multimeter, an oscilloscope, an impedance analyser or others) for obtaining at least one electric signal between at least two electrodes, wherein the at least one electric signal is at least affected by whether one or more cells of a plurality of cells in the fluid pass through the measurement area. Further details regarding the measurement area are given by exemplary embodiments illustrated in Figs. 2a, 2b and Fig. 4 as described below.

In some exemplary embodiments of system 100, only a part of the fluid flow that passes through filter unit 130 is guided to a particular measurement area incorporated in flow-through cell 140 and one further part of the fluid flow that passes through filter unit 130 is guided to one further particular measurement area, that may also be incorporated in flow-through cell 140 or in one further flow-through cell not shown in Fig. 1. In such examples, the fluid flow may be divided into at least two flow parts after passing through filter unit 130. For example, guiding at least one further part of the fluid flow, after the fluid flow passed through filter unit 130, to one further measurement area may be understood to mean that the process of validating filter unit 130 may be parallelised by using not only one single measurement area, but two or more measurement areas for obtaining respective electric signals based on which a validity information may be determined. This approach of parallelising may for example increase the throughput of the fluid that may be checked for containing any cells after passing through filter unit 130.

Figs. 2a and 2b show an exemplary embodiment according to the various aspects of the present disclosure.

Referring to Fig. 2a, according to this exemplary embodiment, a fluid flow of a fluid 210 may be guided to a measurement area 220, wherein measurement area 220 may be understood as a section of a channel 260. Within measurement area 220, fluid 210 may for example be exposed to an alternating electric field 240 between two electrodes 230. An electric signal that is obtained between the two electrodes 230 may for example be at least affected by one cell 250 in fluid 210 passing through measurement area 220. In view of system 100 depicted in Fig. 1, channel 260 may for example be part of flow-through cell 140.

For example, the fluid flow of fluid 210 may be guided to measurement area 220 as a section of channel 260 by one or more fluid lines that connect channel 260 with a filter unit, which may for example be understood as filter unit 130 of system 100 as depicted in Fig. 1. Accordingly, fluid 210 may be guided to measurement area 220 after passing through filter unit 130. For example, channel 260 may be connected to outlet opening 320 of filter unit 300 as depicted in Fig. 3. In some examples, channel 260 may be part of a fluidic chip (e.g. a millifluidic or microfluidic chip) which may also incorporate the two electrodes 230.

In view of system 100 as depicted in Fig. 1, cell 250 (e.g. a bacterial cell) may for example be a cell of a plurality of cells which has been added to fluid 210 before the fluid passes filter unit 130 (e.g. by inserting the plurality of cells to reservoir 110). For example, due to leakages or defects in a filter membrane and/or in connections of filter unit 130, fluid 210 passing filter unit 130 may not have been fully filtered and cell 250 contained in fluid 210 could pass the filter unit without being filtered out before it reaches measurement area 220. Accordingly, a validity information indicating a validity of filter unit 130, which may be determined at least partially based on at least one electric signal obtained between the two electrodes 230, may for example indicate that filter unit 130 is not valid.

In a non-limiting example, it may be assumed that obtaining an electric signal between the two electrodes 230 comprises observing a time-dependent electric current signal $I(t)$ as electric current signal by measuring an amplitude $\hat{I}$ and phase $\varphi$ of the electric current signal at one or more probe frequencies $f = \omega/2\pi$.

$$I(t) = \hat{I} \cdot \sin(\omega t + \varphi),$$

which is measured between the two electrodes 230 in response to alternating electric field 240. In particular, alternating electric field 240 may be generated by applying a time-dependent voltage signal $V(t) = \hat{V} \cdot \sin(\omega t)$ with a voltage amplitude $\hat{V}$ to the two electrodes 230. In other examples, alternating electric field 240 between the two electrodes 230 may be generated by one or more additional electrodes (e.g. in a configuration of in total three or four electrodes). As an exemplary alternative to obtaining an electric current signal as electric signal between the two electrodes 230, an alternating electric current may for example be forced through the two electrodes 230 and fluid 210 located at measurement area 220 between the two electrodes 230. In such an example, the at least one electric signal obtained between the at least two electrodes may be a voltage across the two electrodes 230.

In other examples, a first set of at least two electrodes 230 may generate an alternating electric current and a second set of at least two electrodes may be used to detect the resulting alternating voltage at the position of the second set of electrodes (e.g. an amplitude and/or a phase of the alternating voltage).

Considering for example a bacterial cell 250 contained in fluid 210 passing through measurement area 220, an electrical conductivity across the cell membrane of bacterial cell 250 may be considered to be rather low and the electrical capacitance of the cell membrane may be considered to be rather high, which may for example imply that the cell membrane poses a significant barrier to a current flow through fluid 210. Accordingly, the time-dependent electric current signal $I(t)$ obtained between the two electrodes 230 may be affected (e.g. reduced) by bacterial cell 250 passing through measurement area 220.

In other examples, the cell membrane of bacterial cell 250 may be a barrier for the current flow through fluid 210, but the alternating electrical field 240 may cause an alternating polarization of the cell(s) within fluid 210 exposed to alternating electric field 240. This may lead to an increase of the permittivity of fluid 210 within measurement area 220, which may for example be determined (e.g. evaluated) at least partially based on the at least one electric signal. For example, this determining of the permittivity may comprise detecting a phase shift of the alternating voltage measured by a second set of at least two electrodes.

Referring to Fig. 2b, it may for example be assumed that a time-dependent electric current signal $I(t)$ = $\hat{I} \cdot \sin(\omega t + \varphi)$ is obtained between the two electrodes 230 over a specific time period in response to alternating electric field 240 generated by applying a time-dependent voltage signal $V(t) = \hat{V} \cdot \sin(\omega t)$. The electric current signal may be obtained at one or more probes frequencies at which for example the effect that cell 250 in fluid 210 passing through measurement area 220 has on the electric current signal is particularly large (e.g. for example larger compared to other frequencies).

An electric impedance $Z$ at least partially based on the electric current signal $I(t)$ may then for example be determined by

$$Z(j\omega) = \frac{\hat{V}}{\hat{I}} \cdot e^{-j\varphi} = |Z| \cdot e^{-j \cdot \mathrm{Arg}(Z)},$$

wherein $j$ is the imaginary unit and the magnitude $|Z|$ represents the ratio of the voltage amplitude to the current amplitude, while the argument $\mathrm{Arg}(Z)$ gives the phase difference between voltage and current. The electrical impedance may for example be determined at the one or more probe frequencies at which the electric current signal $I(t)$ is obtained. If for example the electric current signal $I(t)$ is obtained over a range of probe frequencies, the electrical impedance may be determined at this range of probe frequencies, which may for example provide an impedance spectrum.

The electric impedance $Z$ (e.g. the magnitude $|Z|$ or argument $\mathrm{Arg}(Z)$ of the electric impedance) determined at least partially based on electric current signal $I(t)$ may for example indicate whether one or more cells (e.g. cell 250) of a plurality of cells in fluid 210 pass through measurement area 220, which may for example be understood to mean that the electric impedance changes (e.g. increases) when one or more cells of a plurality of cells in the fluid pass through measurement area 220. Considering for example bacterial cell 250 contained in fluid 210 passing through measurement area 220, the cell membrane may pose a significant barrier to a current flow through fluid 210. Accordingly, for example the magnitude $|Z|$ of the electric impedance determined at least partially based on electric current signal $I(t)$ may be increased by bacterial cell 250 passing through measurement area 220.

Fig. 2b shows an exemplary plot of an electric impedance magnitude $|Z|$ at one particular probe frequency over time for a specified time period, wherein the electric impedance magnitude $|Z|$ is increased several times as it may for example be indicated by one or more peak events in the electric impedance magnitude $|Z|$. For example, such peaks may be understood to indicate that one or more cells passed through the measurement area. In such an example, it may be counted how many times the electric impedance indicates one or more cells passing through the measurement area over the specific time period. Regarding for example the plot shown in Fig. 2b, the electric impedance magnitude $|Z|$ may indicate a particular number of times (e.g. three times) that a respective one or more cells passed through the measurement area during the specific time period. For example, this number may be indicated by the at least one validity information determined at least partially based on the electric impedance.

Fig. 3 shows an exemplary embodiment of a filter unit 300 according to the various aspects of the present disclosure. Without limiting the scope of the present disclosure, filter unit 300 may be assumed as exemplary embodiment of filter unit 130 in system 100 shown in Fig. 1.

Filter unit 300 may be understood to comprise at least a filter membrane (not shown in Fig. 3) in a filter housing 330, wherein the filter membrane may separate a first chamber from a second chamber (not shown in Fig. 3) within the filter housing 330. For example, the first chamber may be connected to an inlet opening 310 of filter unit 300 and the second chamber may be connected to an outlet opening 320 of filter unit 300, such that all fluid flowing through filter unit 300 must pass through the filter membrane. Accordingly, the filter membrane may be connected to housing 330 without allowing bypasses through connections between the filter membrane and filter housing 330. Connections may for example be made by embedding in a melt, ultrasonic welding, gluing, overmolding and other techniques. When validating filter unit 300, it may for example be tested whether the filter membrane has defects (e.g. cracks) or whether connections between the filter membrane and housing 330 may be incomplete. For example, filter unit 300 may be considered valid if the filter membrane and the connections are free from defects or leakages, such that a fluid passing filter unit 300 is successfully filtered and cells potentially contained in the fluid before passing filter unit 300 are withheld by filter unit 300. In another example, filter unit 300 may be considered not valid if the filter membrane and/or the connections have defects or leakages, such that a fluid passing filter unit 300 may not be fully filtered and cells potentially contained in the fluid before passing filter unit 300 may pass filter unit 300 without being filtered out.

For example, filter units such as filter unit 300 may be used in a wide variety of industrial applications. In operation, a fluid to be filtered may for example be pumped radially through filter unit 300. In particular, the fluid may be pumped under overpressure through inlet opening 310 into an inner tube, which may be closed on an outlet side, from where the fluid may pass through the openings in the inner tube into an annular gap, passes through a filter membrane and leaves filter unit 300 through the openings in an outer tube connected to outlet opening 320. For example, a filter membrane of filter unit 300 may be adapted to a respective filtration task and may, for example, be designed as a film, a porous membrane, a fleece, a fabric or a mixture thereof. For example, a filter membrane of filter unit 300 may be a single or multilayer filter membrane. Depending on the filter membrane, filter units of various filter surfaces may be available. For example, filter unit 300 may be understood as disc filter offering a rather small filter surface, while larger filter surfaces may for example be provided by filter cartridges, wherein the filter membrane may be pleated (e. g. folded). In such cases, a filter membrane may be surrounded by drainage fleeces so that a fluid can penetrate into the pleat. This structure may then for example be integrated into either a plastic or metal housing.

Considering the various embodiments of a filter unit according to the present disclosure, it shall be understood that an applicability of a validation test according to the present disclosure may not be limited to certain embodiments of the tested filter unit.

Fig. 4 shows an exemplary embodiment of an apparatus 400 according to the second aspect of the present disclosure. For example, apparatus 400 may be connected to or at least partially be incorporated in flow-through cell 140 in system 100 as shown in Fig. 1. Without limiting the scope of the present disclosure, it may be assumed that apparatus 400 comprises means for performing at least some actions of the actions of flow chart 500 (e.g. at least the non-optional actions of flow chart 500) shown in Fig. 5.

According to the exemplary embodiment of apparatus 400, a fluid flow of a fluid 410 is guided to a measurement area 420, wherein measurement area 420 may be understood as section of a channel 440. Within measurement area 420, fluid 410 may for example be exposed to an alternating electric field (not shown in Fig. 4) between two electrodes 430. An electric signal that is obtained between the two electrodes 430 may for example be at least affected by whether one or more cells in fluid 410 passing through measurement area 420. The two electrodes may for example be electrically connected to a measurement unit 450, which may for example be electrically connected to an evaluation unit 460. The exemplary embodiment of apparatus 400 may at least in part correspond to the exemplary embodiment shown in Fig. 2a, for example fluid 210 may correspond to fluid 410, measurement area 220 may correspond to measurement area 420, the two electrodes 230 may correspond to the two electrodes 430 and channel 260 may correspond to channel 440.

For example, a fluid flow of fluid 410 may be guided to measurement area 420 as a section of channel 440 by one or more fluid lines that connect channel 440 with a filter unit, which may for example be understood as filter unit 130 of system 100 as depicted in Fig. 1. Accordingly, fluid 410 may be guided to measurement area 420 after passing through filter unit 130. For example, channel 440 may be connected to outlet opening 320 of filter unit 300 as depicted in Fig. 3. In some examples, channel 440 may be part of a fluidic chip (e.g. a millifluidic or microfluidic chip) which may also incorporate the two electrodes 430.

In some examples, the two electrodes 430 may be electrically connected to or may be part of measurement unit 450, which measurement unit 450 may for example be configured to obtain at least one electric signal between the two electrodes 430, wherein the at least one electric signal is at least affected by whether one or more cells of a plurality of cells in fluid 410 pass through measurement area 420. For obtaining at least one electric signal between the two electrodes 430, measurement unit 450 may for example comprise one or more measuring instruments such as an ampere meter, a multimeter, an oscilloscope, an impedance analyser or others. In addition, obtaining at least one electric signal may for example further comprise processing the electric signal after the electric signal may be measured, for example by amplifying, filtering, correcting and/or converting the measured at least one electric signal. For processing the at least one electric signal, measurement unit 450 may for example further comprise one or more electric amplifiers, filters and/or converters. In some further examples, measurement unit 450 may further comprise means (e. g. a voltage or current source, an electric signal generator or others) for exposing fluid 410 to at least one alternating electric field within measurement area 420 between the two electrodes 430.

Evaluation unit 460 may for example be electrically connected to measurement unit 450 and may receive the obtained at least one electric signal from measurement unit 450. At least partially based on the at least one electric signal received from measurement unit 450, evaluation unit 460 may for example determine an electric impedance (or e.g. a capacitance, a permittivity or other dielectric fluid properties) and/or at least one validity information indicating a validity of a filter unit (e.g. a validity of filter unit 130 in system 100 as depicted in Fig. 1). For example, measurement unit 460 may comprise at least one processor and at least one memory including computer program code, the at least one memory and the computer program code configured to, with the at least one processor, cause evaluation unit 460 at least to determine at least partially based on the at least one electric signal an electric impedance and/or at least one validity information indicating a validity of a filter unit. In further examples, evaluation unit 460 comprise a display or similar means as well as one or more electronic interfaces for a connection to an external device (e.g. a computer).

Fig. 5 shows a flow chart 500 illustrating an exemplary embodiment of a method according to the first aspect of the present disclosure. Without limiting the scope of the present disclosure, it may be assumed in the following that the actions of flow chart 500 are performed in an environment according to system 100 comprising reservoir 110, pump 120, filter unit 130 and flow-through cell 140 as depicted in Fig. 1.

Optional action 510 is generating a fluid flow of a fluid through filter unit 130, wherein a plurality of cells is added to the fluid before the fluid flow of the fluid passes through filter unit 130.

For example, generating a fluid flow of the fluid through filter unit 130 may comprise transporting the fluid through filter unit 130 by pumping the fluid into filter unit 130. For pumping the fluid into filter unit 130, for example a peristaltic pump 120 may be used that may at one side be connected by fluid lines to reservoir 110 providing the fluid and at the other side be connected by fluid lines to filter unit 130.

For example, optional action 510 may comprise adding the plurality of cells by inserting (e.g. pipetting) the cells into the fluid. Considering for example a plurality of bacterial cells, adding the plurality of cells may require a particular bacteria preparation procedure (e.g. an incubation procedure) before the bacterial cells are added to the fluid.

Action 520 is guiding the fluid flow of the fluid, after the fluid flow passed through filter unit 130, to a measurement area that is connected to filter unit 130, wherein within the measurement area the fluid is exposed to at least one alternating electric field between at least two electrodes.

For example, in view of the exemplary embodiment shown in Fig. 2a, a fluid flow of a fluid 210 may be guided to a measurement area 220, wherein measurement area 220 may be understood as section of a channel 260. Within measurement area 220, fluid 210 may for example be exposed to an alternating electric field 240 between two electrodes 230. An electric signal that is obtained between the two electrodes 230 may for example be at least affected by one cell 250 in fluid 210 passing through measurement area 220. In view of system 100 depicted in Fig. 1, channel 260 may for example be part of flow-through cell 140.

Further in view of the exemplary embodiment shown in Fig. 2a, cell 250 (e.g. a bacterial cell) may for example be a cell of a plurality of cells which has been added to fluid 210 in action 510. For example, due to leakages or defects in a filter membrane and/or in connections of filter unit 130, fluid 210 passing filter unit 130 may not have been fully filtered and cell 250 contained in fluid 210 could pass filter unit 130 without being filtered out before it reaches measurement area 220. In such an example, filter unit 130 maybe considered not valid.

Action 530 is obtaining at least one electric signal between the at least two electrodes, wherein the at least one electric signal is at least affected by whether one or more cells of the plurality of cells in the fluid pass through the measurement area.

For example, in view of the exemplary embodiment shown in Fig. 2a, it may be assumed that obtaining an electric signal between the two electrodes 230 comprises observing a time-dependent electric current signal $I(t)$, which is measured between the two electrodes 230 at one or more probe frequencies in response to alternating electric field 240. In particular, alternating electric field 240 may be generated by applying a time-dependent voltage signal $V(t)$. In other examples, alternating electric field 240 between the two electrodes 230 may be generated by one or more additional electrodes (e.g. in a configuration of in total three or four electrodes). As an exemplary alternative to obtaining an electric current signal as electric signal between the two electrodes 230, an alternating electric current may for example be forced through the two electrodes 230 and fluid 210 located at measurement area 220 between the two electrodes 230. In such an example, the at least one electric signal obtained between the at least two electrodes may be a voltage across the two electrodes 230.

Considering for example a bacterial cell 250 contained in fluid 210 passing through measurement area 220, an electrical conductivity across the cell membrane of bacterial cell 250 may be considered to be rather low and the electrical capacitance of the cell membrane may be considered to be rather high, which may for example imply that the cell membrane poses a significant barrier to a current flow through fluid 210. Accordingly, the time-dependent electric current signal $I(t)$ obtained between the two electrodes 230 may be affected (e.g. reduced) by bacterial cell 250 passing through measurement area 220.

Action 540 is determining, at least partially based on the obtained at least one electric signal, at least one validity information indicating a validity of the filter unit.

For example, the electric current signal obtained in action 530 may be obtained for a specific time period. In such an example and in view of the exemplary embodiment shown in Fig. 2a, it may be counted how many times the electric signal may be affected by one or more cells 250 passing through measurement area 220 over the specific time period. If for example the at least one electric signal indicates a particular number of times that a cell passes through measurement area 220 during the specific time period, this number may be indicated by the at least one validity information determined at least partially based on the at least one electric signal. In another example, a particular number of times that a cell passes through measurement area 220 during the specific time period may be determined at least partially based on an electric impedance, which may be determined at least partially based on the obtained at least one electric signal.

For example, filter unit 130 may be considered valid if the filter membrane and the connections of filter unit 130 are free from defects or leakages, such that a fluid passing filter unit 130 is successfully filtered and cells 250 potentially contained in fluid 210 before passing filter unit 130 are withheld by filter unit 130. Accordingly, if for example the at least one validity information indicates that a particular number of cells of the plurality of cells in the fluid passed through the measurement area during a specified time period, the filter unit may be considered valid if the particular number of cells is below a threshold number of cells. This may be understood to mean that it may be acceptable for the filter unit to be considered valid if no cells or at most a particular number of cells passed the filter unit and reached the measurement area during the specific time period.

Optional action 550 is reporting the at least one validity information to a user and/or indicating an alarm message at least partially based on the at least one validity information.

For example, when reporting the at least one validity information indicating a validity of filter unit 130 to a user, the user may be informed on whether filter unit 130 is valid or not or on a degree of validity of filter unit 130. In further examples, the user may decide at least partially based on the reported validity information whether filter unit 130 is valid and thus passes the validation test or is not valid and thus fails the validation test. In further examples, an alarm message may be indicated when the at least one validity information indicates that filter unit 130 is not valid. Reporting the validity information to a user and/or indicating an alarm message may for example comprise presenting the validity information or the alarm message on a visual display (e.g. a display that is part of or connected to an apparatus performing the determining the at least one validity information) such that it for example may be shown to a user.

Advantageously, the actions of flow chart 500 for example provide a time efficient and automated procedure for testing whether filter unit 130 is valid. In particular, cells 250 that might pass filter unit 130 due to leakages or defects of filter unit 130 may be detected in action 530 by means of at least one electric signal obtained that is affected by whether one or more cells 250 of a plurality of cells in the fluid pass through measurement area 220. This way, a manual and time consuming detection of cells as it is for example necessary when incubating an analytical filter and counting possibly growing microorganisms may be avoided.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

In the present disclosure, the wording "A, or B, or C, or a combination thereof" or "at least one of A, B and/or C" may be understood to be not exhaustive and to include at least the following: (i) A, or (ii) B, or (iii) C, or (iv) A and B, or (v) A and C, or (vi) B and C, or (vii) A and B and C.

**Claims**

1. A method (500) for validating a filter unit (130; 300), wherein the method comprises:

   - guiding (520) a fluid flow of a fluid (210; 410), after the fluid flow passed through the filter unit (130; 300), to a measurement area (220; 420) that is connected to the filter unit (130; 300), wherein within the measurement area (220; 420) the fluid is exposed to at least one alternating electric field (240) between at least two electrodes (230; 430);
   - obtaining (530) at least one electric signal between the at least two electrodes (230; 430), wherein the at least one electric signal is at least affected by whether one or more cells (250) of a plurality of cells in the fluid pass through the measurement area (220; 420); and
   - determining (540), at least partially based on the obtained at least one electric signal, at least one validity information indicating a validity of the filter unit (130; 300).

2. The method (500) according to claim 1, wherein the method further comprises:

   - reporting (550) the at least one validity information to a user and/or indicating an alarm message at least partially based on the at least one validity information.

3. The method (500) according to claim 1 or claim 2, wherein the plurality of cells is added to the fluid before the fluid flow of the fluid (210; 410) passes through the filter unit (130; 300).

4. The method (500) according to any of the preceding claims, wherein the method further comprises:

   - generating (510) the fluid flow of the fluid (210; 410) through the filter unit (130; 300).

5. The method (500) according to any of the preceding claims, wherein the obtaining (530) the at least one electric signal comprises:

   - observing an electric current between the at least two electrodes (230; 430).

6. The method (500) according to claim 5, wherein the observing the electric current between the at least two electrodes (230; 430) comprises measuring an amplitude and/or a phase of the electric current.

7. The method (500) according to any of the preceding claims, wherein the at least one alternating electric field (240) oscillates at one or more probe frequencies at which the at least one electric signal between the at least two electrodes (230; 430) is obtained.

8. The method (500) according to any of the preceding claims, wherein the at least one electric signal is further affected by at least one of the following cell characteristics of the one or more cells (250) passing through the measurement area (220; 420):

   - a cell size, a cell shape, a cell type and/or a cell viability.

9. The method (500) according to any of the preceding claims, wherein the determining (540) at least one validity information further comprises:

   - determining an electric impedance at least partially based on the obtained at least one electric signal, wherein the determining (540) at least one validity information is at least partially based on the determined electric impedance.

10. The method (500) according to any of the preceding claims, wherein the at least one validity information indicates a validity of the filter unit (130; 300) by indicating a number of cells (250) of the plurality of cells in the fluid that passed through the measurement area (220; 420) during a specified time period.

11. The method (500) according to any of the preceding claims, wherein the at least one validity information indicates a validity of the filter unit (130; 300) by indicating at least one of the following:

   - whether any cell (250) of the plurality of cells in the fluid passed through the measurement area (220; 420) during a specified time period; and/or
   - a number of viable cells that passed through the measurement area (220; 420) during a specified time period; and/or
   - a number of cells of a specified cell size, a specified cell shape and/or a specified cell type that passed through the measurement area (220; 420) during a specified time period.

12. The method (500) according to any of the preceding claims, wherein the measurement area (220; 420) is a section of a channel (260) through which the fluid flow is guided.

13. The method (500) according to any of the preceding claims, wherein the method further comprises:

   - guiding at least one further part of the fluid flow, after the fluid flow passed through the filter unit (130; 300), to one further measurement area (220; 420) that is connected to the filter unit (130; 300), wherein within the one further measurement area (220; 420) the fluid is exposed to at least one further alternating electric field between at least two further electrodes;
   - obtaining at least one further electric signal (240) between the at least two further electrodes (230; 430), wherein the at least one further electric signal is at least affected by whether one or more cells (250) of the plurality of cells in the fluid pass through the one further measurement area (220; 420), and wherein the determining (540) the at least one validity information indicating a validity of the filter unit (130; 300) is at least partially based on the obtained at least one electric signal and the obtained at least one further electric signal.

14. An apparatus (140; 400) for validating a filter unit (130; 300), wherein the apparatus comprises:

   - means (260; 440) for guiding a fluid flow of a fluid (210; 410), after the fluid flow passed through the filter unit (130; 300), to a measurement area (220; 420) that is connectable to the filter unit (130; 300) and means (450) for exposing the fluid to at least one alternating electric field (240) within the measurement area (220; 420) between at least two electrodes (230; 430);
   - means (450) for obtaining at least one electric signal between the at least two electrodes (230; 430), wherein the at least one electric signal is at least affected by whether one or more cells (250) of a plurality of cells in the fluid pass through the measurement area (220; 420); and
- means (460) for determining, at least partially based on the obtained at least one electric signal, at least one validity information indicating a validity of the filter unit (130; 300).

15. A system (100) comprising the apparatus (140; 400) according to claim 14 and the filter unit (130; 300).

Fig.1

Fig.2a

Fig.2b

Fig.3

Fig.4

500

510

generating a fluid flow of a fluid through a filter unit, wherein
a plurality of cells is added to the fluid before the fluid flow
of the fluid passes through the filter unit

520

guiding the fluid flow of the fluid, after the fluid flow passed
through the filter unit, to a measurement area that is connected
to the filter unit, wherein within the measurement area the fluid
is exposed to at least one alternating electric field between
at least two electrodes

530

obtaining at least one electric signal between the at least two
electrodes, wherein the at least one electric signal is at least
affected by whether one or more cells of the plurality of cells
in the fluid pass through the measurement area

540

determining, at least partially based on the obtained
at least one electric signal, at least one validity information
indicating a validity of the filter unit

550

reporting the at least one validity information to a user and/or
indicating an alarm message at least partially based on the
at least one validity information

Fig.5

Europäisches
Patentamt
European
Patent Office
Office européen
des brevets

**EUROPEAN SEARCH REPORT**

Application Number

EP 22 19 1186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 01/39870 A2 (NORIT MEMBRAAN TECH BV [NL] ET AL.) 7 June 2001 (2001-06-07) | 1-13 | INV. G01N15/08 |
| A | * page 1, line 1 - line 13; figure 1 * <br> * page 3, line 30 - page 8, line 9 * <br> * page 10, line 1 - line 32 * <br> ----- | 14,15 | |
| X | EP 2 755 025 A1 (AMPHASYS AG TECHNOPARK LUCERNE [CH]) 16 July 2014 (2014-07-16) | 14,15 | |
| Y | * paragraph [0001] - paragraph [0002]; figure 6 * <br> * paragraph [0009] - paragraph [0015] * <br> * paragraph [0028] * <br> ----- | 1-13 | |
| A | US 2010/097605 A1 (MURAKAMI SEIGO [JP] ET AL) 22 April 2010 (2010-04-22) <br> * paragraph [0023]; figure 1 * <br> ----- | 1-15 | |
| A | US 8 991 235 B2 (JONS STEVEN D [US]; DOW GLOBAL TECHNOLOGIES LLC [US]) 31 March 2015 (2015-03-31) <br> * column 1, line 5 - line 10 * <br> * column 2, line 41 - line 44 * <br> * column 5, line 55 - column 6, line 4 * <br> ----- | 1-15 | |

**TECHNICAL FIELDS SEARCHED (IPC)**

G01N
B01D

The present search report has been drawn up for all claims

| Place of search | Date of completion of the search | Examiner |
|---|---|---|
| The Hague | 3 February 2023 | Werth, Jochen |

EPO FORM 1503 03.82 (P04C01)

## ANNEX TO THE EUROPEAN SEARCH REPORT
## ON EUROPEAN PATENT APPLICATION NO.

EP 22 19 1186

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2023

| Patent document cited in search report | | Publication date | Patent family member(s) | | Publication date |
|---|---|---|---|---|---|
| WO 0139870 | A2 | 07-06-2001 | AU | 2557901 A | 12-06-2001 |
| | | | NL | 1013701 C2 | 01-06-2001 |
| | | | WO | 0139870 A2 | 07-06-2001 |
| EP 2755025 | A1 | 16-07-2014 | NONE | | |
| US 2010097605 | A1 | 22-04-2010 | CN | 101529224 A | 09-09-2009 |
| | | | JP | 4445569 B2 | 07-04-2010 |
| | | | JP | WO2008047926 A1 | 25-02-2010 |
| | | | US | 2010097605 A1 | 22-04-2010 |
| | | | WO | 2008047926 A1 | 24-04-2008 |
| US 8991235 | B2 | 31-03-2015 | US | 2010281960 A1 | 11-11-2010 |
| | | | WO | 2010129144 A1 | 11-11-2010 |

EPO FORM P0459

For more details about this annex : see Official Journal of the European Patent Office, No. 12/82